# EUROPÄISCHE PATENTSCHRIFT

(11) **EP 2 961 345 B1**
(45) Veröffentlichungstag und Bekanntmachung des Hinweises auf die Patenterteilung: **03.05.2017**
(21) Anmeldenummer: 14711175.1
(22) Anmeldetag: 03.03.2014
(51) Int. Cl.: A61C 13/34, A61C 13/00

(54) **VERFAHREN ZUR VIRTUELLEN BEARBEITUNG EINES ZAHNMODELLS**
METHOD FOR THE VIRTUAL PROCESSING OF A DENTAL MODEL
PROCÉDÉ DE TRAITEMENT VIRTUEL D'UN MODÈLE DENTAIRE

(30) Priorität: 01.03.2013 DE 102013203585
(43) Veröffentlichungstag der Anmeldung: 06.01.2016
(73) Patentinhaber: Sirona Dental Systems GmbH, 64625 Bensheim (DE)
(72) Erfinder: HAUTH, Steffen, 55124 Mainz (DE); SCHNEIDER, Sascha, 64367 Mühltal (DE)
(74) Vertreter: Sommer, Peter
(86) Internationale Anmeldenummer: PCT/EP2014/054056
(87) Internationale Veröffentlichungsnummer: WO 2014/131909

(56) Entgegenhaltungen:
- EP-A1- 1 614 397
- WO-A1-2012/080380

## Beschreibung

### Technisches Gebiet

Die Erfindung betrifft ein Verfahren zur virtuellen Nachbearbeitung eines bei der Planung eines Zahnersatzteils erzeugten ersten virtuellen dreidimensionalen Zahnmodells dieses Zahnersatzteils.

### Stand der Technik

Aus dem Stand der Technik sind mehrere Verfahren zur Bearbeitung eines dreidimensionalen Zahnmodells mittels eines virtuellen Werkzeugs bekannt, siehe beispielsweise WO 2012/080 380 A1. Das Zahnmodell wird im ersten Schritt mittels eines Computers automatisch unter der Berücksichtigung der Nachbarzähne, der gegenüberliegenden Antagonisten und anderer Faktoren geplant. Anschließend wird nach dem geplanten Zahnmodell das Zahnersatzteil mittels einer CAD/CAM-Bearbeitungsmaschine aus einem Rohling herausgeschliffen. Anschließend werden durch den Zahnarzt oder einen Zahntechniker in einem Nachbearbeitungsschritt mittels eines Bearbeitungsinstruments feine Oberflächenstrukturen in sichtbare ästhetische Oberflächen des Zahnersatzteils eingeritzt beziehungsweise hineingeschliffen.

Das Fachbuch "Funktionelle Frontzahn-Ästhetik", Ralf Suckert, 1990 auf den Seiten 102 bis 108 beschreibt das manuelle Einfügen von ästhetischen Oberflächenstrukturen an einem hergestellten Zahnersatzteil unter Verwendung unterschiedlicher Schleifkörper zur Oberflächenbearbeitung.

Ein Nachteil dieses Verfahrens besteht darin, dass das Einfügen von ästhetischen Oberflächenstrukturen auf eine aufwendige Art und Weise manuell durch einen Zahnarzt oder Zahntechniker erfolgt. Dieser manuelle Nachbearbeitungsschritt erfordert ein hohes Maß an Erfahrung und Begabung bei der Nachahmung natürlicher Oberflächenstrukturen, um einen ästhetischen Eindruck eines natürlichen Zahns zu erreichen.

DE 102004038136 A1 offenbart ein Verfahren zur Konstruktion einer ästhetischen Oberfläche eines Zahnersatzteils, wobei dreidimensionale Daten dieser Zahnoberfläche eines bereits gespeicherten Zahns zumindest als Teil der Oberfläche des herzustellenden Zahnersatzteils verwendet werden, wobei die Zahnoberfläche in ihrer Ausdehnung bestimmt wird und im Bereich einer Präparationsstelle angeordnet wird. Die Größe der Zahnoberfläche kann auch verändert werden, so dass eine Anpassung an die Nachbarzähne ermöglicht wird.

Ein Nachteil dieses Verfahrens besteht darin, dass eine bereits vorhandene Zahnoberfläche aus einer Datenbank an das herzustellende Zahnersatzteil in ihrer Größe angepasst wird. Eine individuelle Anpassung der Zahnoberfläche durch einen Benutzer ist nach diesem Verfahren nicht möglich.

DE 102006021640 B3 offenbart einen Rohling mit einer vorgefertigten ästhetisch relevanten Teilendfläche einer Zahnoberfläche, wobei ein geplantes 3D-Modell des Zahnersatzteils aus diesem Rohling derart herausgearbeitet wird, dass die vorgefertigte Teilendfläche des Rohlings zumindest in einem zentralen Bereich unbearbeitet bleibt, so dass das fertige Zahnersatz bereits eine vorgefertigte Teilfläche aufweist.

Ein Nachteil dieses Verfahrens besteht darin, dass eine große Anzahl von Rohlingen mit verschiedenen vorgefertigten Teilendflächen bereitgestellt werden muss, um eine Herstellung unterschiedlich geformter Zahnersatzteile im Dentallabor oder in der Zahnpraxis zu ermöglichen.

Die Aufgabe der vorliegenden Erfindung besteht daher darin, ein Verfahren zur Herstellung eines Zahnersatzteils bereitzustellen, das eine zeitsparende, einfache und fehlerfreie Herstellung von Zahnersatzteilen mit ästhetischen Oberflächenstrukturen ermöglicht.

### Darstellung der Erfindung

Die Erfindung betrifft ein Verfahren zur virtuellen Nachbearbeitung eines bei der Planung eines Zahnersatzteils erzeugten ersten virtuellen dreidimensionalen Zahnmodells dieses Zahnersatzteils. Das erste virtuelle Zahnmodell wird nach der Planung in einem weiteren Verfahrensschritt virtuell bearbeitet, indem mindestens eine bereits vorhandene dreidimensionale ästhetische Oberflächenstruktur mittels eines virtuellen Werkzeugs unter Verwendung eines Computers und einer Anzeigevorrichtung an das erste Zahnmodell angepasst wird und anschließend in das erste Zahnmodell eingefügt wird. Die ästhetische Oberflächenstruktur weist eine vorgegebene Einprägungstiefe auf. Eine Zahnoberfläche des Zahnmodells wird durch nach der Anpassung zumindest teilweise durch die angepasste ästhetische Oberflächenstruktur ersetzt. Die virtuelle Bearbeitung der anzupassenden ästhetischen Oberflächenstruktur erfolgt dadurch, dass ein bestimmter ausgewählter Parameter der ästhetischen Oberflächenstruktur zwischen einem ersten Wert und einen zweiten Wert dieses ausgewählten Parameters variiert wird, indem das virtuelle Werkzeug zwischen einer ersten Endstellung und einer zweiten Endstellung verstellt wird, wobei die Parameter der ästhetischen Oberflächenstruktur eine Einprägungstiefe der ästhetischen Oberflächenstruktur relativ zu einer ursprünglichen glatten Oberfläche des ursprünglichen ersten Zahnmodells sind.

Das vorliegende Verfahren erfolgt erst nach einer Planung eines Zahnersatzteils in einem Nachbearbeitungsschritt, wobei ästhetische Oberflächenstrukturen eingefügt werden.

Das zu planende Zahnersatzteil kann ein Teil eines Zahns, wie eine Teilkrone, ein Onlay, ein Inlay oder ein Veneer oder ein ganzer Zahn, wie eine Vollkrone, oder mehrere miteinander verbundene oder getrennt voneinander angeordnete Zähne eines Kieferbogens sein. Das erste Zahnmodell kann ein Teil des Zahnersatzteils oder der gesamte Zahnersatz sein. Zur Nachbearbeitung des ersten Zahnmodells kann dieses vom restlichen Modell des Zahnersatzes oder von einer dreidimensionalen Aufnahme der umgebenden Zahnstrukturen, wie der Nachbarzähne oder eines Restzahns, visuell abgetrennt werden, indem die umgebenden Zahnstrukturen der Aufnahme visuell ausgeblendet werden.

Die Anwendung des virtuellen Werkzeugs erfolgt manuell mittels des Computers und der daran angeschlossenen Eingabemittel, wie einer Maus oder einer Tastatur, wobei das erste Zahnmodell und die anzupassende ästhetische Oberflächenstruktur visuell mittels der Anzeigevorrichtung, wie einem Monitor, dargestellt werden. Die ausgewählte ästhetische Oberflächenstruktur wird also an die Abmessungen des ersten Zahnmodells angepasst und anschließend in dieses eingefügt, so dass das Ergebnis des Verfahrens ein Zahnmodell mit ästhetischen Oberflächenstrukturen ist.

Die Anwendung des virtuellen Werkzeugs führt also zu einer Anpassung der ästhetischen Oberflächenstruktur, die mittels bestimmter Algorithmen erfolgen kann, wobei bei Veränderung eines Oberflächenpunktes des virtuellen Zahnmodells die Winkelverhältnisse und die Längenverhältnisse zu den umgebenden Oberflächenpunkten gleich bleiben. Damit bleiben die Form und die Abmessung der Oberflächenstruktur auch bei einer Vergrößerung oder einer Verkleinerung erhalten. Die Anpassung kann auch in kleinen Schritten iterativ während der gesamten Dauer der Anwendung des virtuellen Werkzeugs erfolgen, so dass beim Einfügen der Oberflächenstruktur in das erste Zahnmodell ein gleichmäßiger Übergang zu den benachbarten Oberflächenpunkten des Zahnmodells gewährleistet wird.

Das virtuelle Werkzeug kann beispielsweise ein virtueller Schieberegler oder ein virtueller Drehregler sein, der eine Verstellung eines bestimmten Parameters, wie der Einprägungstiefe, zwischen zwei Endstellungen ermöglicht.

Die ästhetischen Oberflächenstrukturen können beispielsweise Fissuren, charakteristische Vertiefungen, horizontale patientenindividuelle Wachstumsrillen (sogenannte Perikymatien, Imbrikationslinien oder Retziusstreifen), die im Querschliff des Zahns als konzentrische Kreise erscheinen, oder auch vertikale Rillen sein, die beispielsweise aus zwei sogenannten approximalen Randleisten des Zahns und einer Zentralleiste bestehen. Darüber hinaus können charakteristische Oberflächenstrukturen auch unregelmäßige kleine Einkerbungen und Vertiefungen sein, die patientenindividuell verteilt und geformt sind. Die ästhetischen Oberflächenstrukturen können auch so geformt sein, dass sie ein natürliches Lichtspiel auf der Zahnoberfläche durch Reflexionen und unregelmäßige Lichtbrechungen verursachen und dadurch ein ästhetischer optischer Eindruck eines natürlichen Zahns nachgeahmt wird.

Ein Vorteil dieses Verfahrens besteht darin, dass die ästhetischen Oberflächenstrukturen bereits während der virtuellen Planung des Zahnmodells eingefügt werden, so dass ein Zahnersatzteil mittels einer CAD/CAM-Bearbeitungsmaschine aus einem Rohling herausgeschliffen wird, das bereits ästhetische Oberflächenstrukturen an den sichtbaren ästhetischen Oberflächen, wie einer Labialfläche bei Schneidezähnen und einer Bukkalfläche bei Backenzähnen, aufweist. Dadurch entfällt der manuelle Nachbearbeitungsschritt, bei dem die ästhetischen Oberflächenstrukturen manuell durch einen Zahntechniker eingebracht werden müssen.

Nach diesem Verfahren kann der Benutzer also mittels des virtuellen Werkzeugs die einzusetzende Oberflächenstruktur unmittelbar im Hinblick auf die ausgewählten Parameter, wie die Einprägungstiefe, beeinflussen. Bei der Veränderung der Einprägungstiefe können beispielsweise alle Vertiefungen in Relation zu der ursprünglichen glatten Oberfläche in gleichem Verhältnis vergrößert beziehungsweise verkleinert werden, so dass der Benutzer, wie ein Zahnarzt oder ein Zahntechniker, anhand einer graphischen Darstellung des ersten Zahnmodells mit der variierenden Oberflächenstruktur beurteilen kann, ob ein natürlicher ästhetischer Eindruck erreicht wird.

Vorteilhafterweise kann das virtuelle Werkzeug in Form eines Schiebereglers ausgeführt sein, wobei die mittels der Anzeigevorrichtung angezeigte ästhetische Oberflächenstruktur bezüglich des ausgewählten Parameters zwischen einer ausgewählten ersten Basis-Oberflächenstruktur mit dem ersten Wert dieses Parameters und einer ausgewählten zweiten Basis-Oberflächenstruktur mit dem zweiten Wert dieses Parameters variiert wird, indem der Schieberegler zwischen der ersten Endstellung und der zweiten Endstellung virtuell verschoben wird.

Dadurch kann der Benutzer mittels des Schiebereglers die Oberflächenstruktur im Hinblick auf den ausgewählten Parameter anpassen. Der Benutzer kann also beispielsweise im ersten Schritt die Oberflächenstruktur im Hinblick auf die Größe und im zweiten Schritt im Hinblick auf die Einprägungstiefe anpassen.

Vorteilhafterweise kann die ästhetische Oberflächenstruktur eines Musterzahns aus einer Datenbank mit Musterzähnen ausgewählt werden, die nach Größe, Alter, Abmessungen und/oder nach einer Zahnnummer bzw. Zahnart, wie Schneidezahn, Eckzahn, Prämolar, Molar, sortiert sind.

Dadurch kann der Benutzer also aus der Datenbank entsprechend abhängig von der Größe, der Zahnart beziehungsweise der Zahnnummer nach dem internationalen FDI-Zahnschema einen passenden Musterzahn aussuchen. Anschließend wird automatisch oder manuell eine Teilfläche dieses Musterzahns mit ästhetischen Oberflächenstrukturen ausgewählt, an das erste Zahnmodell angepasst und eingefügt.

Vorteilhafterweise kann die anzupassende ästhetische Oberflächenstruktur von einem Durchschnittszahn übernommen werden, der unter Verwendung eines Hauptachsenanalyseverfahrens und eines Optimierungsverfahrens der kleinsten Quadrate ausgehend von einer Vielzahl vermessener natürlicher Zähne und/oder von Musterzähnen unter Anpassung an die Abmessungen und die Größe des ersten Zahnmodells erzeugt wird.

Dadurch wird also aus einer Vielzahl von aufgenommenen Zahnmodellen ein generischer Zahnmodelldatensatz eines bestimmten Zahntyps erzeugt, wobei Faktoren zumindest der Hauptkomponenten beispielsweise linear so variiert werden, dass festgelegte Optimierungskriterien durch Minimierung einer Fehlerfunktion, wie einer Fehlerfunktion der kleinsten Quadrate, erfüllt werden und dadurch die ausgewählte ästhetische Oberflächenstruktur an das erste Zahnmodell angepasst wird. Die Hauptkomponenten werden dabei durch das Hauptachsenanalyseverfahren ermittelt.

Vorteilhafterweise kann die anzupassende ästhetische Oberflächenstruktur aus einer dreidimensionalen optischen Aufnahme eines Restzahnbereichs, eines Nachbarzahns, eines kontralateralen Zahns und/oder eines Gegenzahns bezüglich des einzusetzenden Zahnersatzteils ausgewählt werden, wobei die Auswahl der anzupassenden ästhetischen Oberflächenstruktur einer bestimmten ästhetischen Oberfläche, wie einer Labialfläche bei Schneidezähnen und/oder einer Bukkalfläche und einer Okklusalfläche bei Backenzähnen, automatisch mittels des Computers unter Verwendung von Mustererkennungsalgorithmen oder manuell durch einen Benutzer mittels der Anzeigevorrichtung erfolgt.

Dadurch erfolgt also vor der Planung eine dreidimensionale optische Vermessung der Zahnsituation, wobei insbesondere der Restzahnbereich einer Präparation für das einzusetzende Zahnersatzteil, die Nachbarzähne, der kontralaterale Zahn und/oder der Gegenzahn beziehungsweise die Gegenzähne erfasst werden. Als Ausgangspunkt für das vorliegende Verfahren wird dann eine Teilfläche mit ästhetischen Oberflächenstrukturen eines dieser Zähne ausgewählt und anschließend an das erste Zahnmodell angepasst und eingefügt. Dadurch kann also insbesondere der ästhetische Eindruck des kontralateralen Zahns oder des Nachbarzahns nachgeahmt werden.

Vorteilhafterweise kann bei der Planung des Zahnersatzteils zusätzlich zum ersten Zahnmodell mindestens ein zweites Zahnmodell eines kontralateralen Zahns geplant worden sein, wobei die an das erste Zahnmodell angepasste Oberflächenstruktur unter Verwendung eines Spiegelungsalgorithmus in das zweite Zahnmodell des kontralateralen Zahns eingefügt wird, wobei das Einfügen der gespiegelten Oberflächenstruktur in das zweite Zahnmodell erst nach der Anpassung der Oberflächenstruktur an das erste Zahnmodell oder simultan zur Anpassung der Oberflächenstruktur an das erste Zahnmodell erfolgt.

Dadurch wird das gleichzeitige Einfügen einer ästhetischen Oberflächenstruktur am kontralateralen Zahn erlaubt, so dass dadurch die Zeitdauer der Planung verkürzt wird.

Vorteilhafterweise kann die anzupassende ästhetische Oberflächenstruktur so gesteuert werden, dass die angepasste erzeugte ästhetische Oberflächenstruktur eine Überkonturierung mit einer im Vergleich zu einem natürlichen Zahn höheren Einprägungstiefe relativ zu einer glatten Oberfläche des unbearbeiteten ersten Zahnmodells aufweist, so dass durch einen Polierungsschritt des Zahnersatzteils nach der Herstellung mittels einer CAD/CAM-Bearbeitungsmaschine Material vom hergestellten Zahnersatzteil abgetragen wird und dadurch die hergestellte ästhetische Oberflächenstruktur im Hinblick auf die Einprägungstiefe einer Oberflächenstruktur eines natürlichen Zahns aus einer dreidimensionalen optischen Aufnahme eines Restzahnbereichs, eines Nachbarzahns, eines kontralateralen Zahns und/oder eines Gegenzahns bezüglich des einzusetzenden Zahnersatzteils entspricht.

Dadurch ist die Überkonturierung der ästhetischen Oberflächenstruktur so bemessen, dass nach dem Polierungsschritt die Einprägungstiefe natürlicher Zähne erreicht wird.

Vorteilhafterweise kann das geplante Zahnersatzteil mit der angepassten ästhetischen Oberflächenstruktur mittels einer CAD/CAM-Bearbeitungsmaschine aus einem Rohling herausgearbeitet werden.

Dadurch wird das fertige Zahnersatzteil mit ästhetischen Oberflächenstrukturen automatisch mittels der CAD/CAM-Bearbeitungsmaschine aus dem Rohling herausgearbeitet.

### Kurzbeschreibung der Zeichnungen

Die Erfindung wird anhand der Zeichnungen erläutert. Es zeigt, die
- Fig. 1: eine Skizze zur Verdeutlichung des vorliegenden Verfahrens, die
- Fig. 2: eine Anwendung des virtuellen Werkzeugs auf eine ausgewählte Teilfläche eines Musterzahns; die
- Fig. 3: eine Skizze zur Verdeutlichung der Einstellung der Einprägungstiefe in einer ersten Endstellung des Schieberegler; die
- Fig. 4: eine Skizze zur Verdeutlichung der Einstellung der Einprägungstiefe in einer zweiten Endstellung des Schieberegler.

### Ausführungsbeispiele

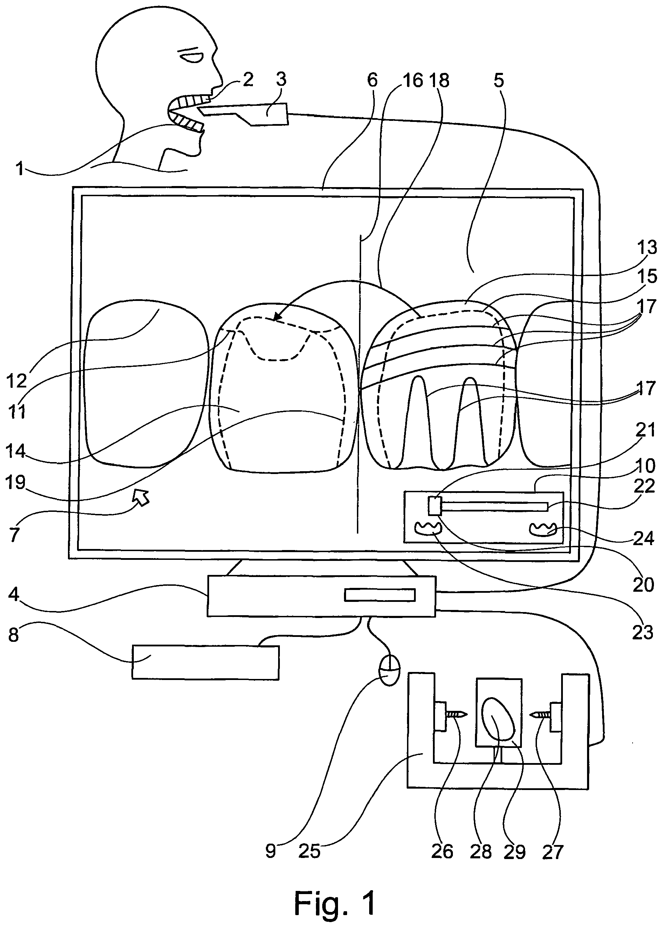

Die Fig. 1 zeigt eine Skizze zur Verdeutlichung des vorliegenden Verfahrens. In einem ersten Schritt wird die Zahnsituation, umfassend beispielsweise einen Unterkiefer 1 oder einen Oberkiefer 2, mittels einer optischen dreidimensionalen dentalen Kamera 3 aufgenommen, wobei im vorliegenden Fall die dentale Kamera auf einem Streifenprojektionsverfahren basiert. Die erzeugten Bilddaten der Kamera 3 werden an einen Computer 4 übermittelt, der die einzelnen Aufnahmen zu einer dreidimensionalen optischen Aufnahme der Zahnsituation zusammenfügt. Die dreidimensionale optische Aufnahme 5 wird mittels einer Anzeigevorrichtung 6, wie einem Monitor angezeigt. Der Benutzer, wie ein Zahnarzt oder ein Zahntechniker, kann über einen Cursor 7 mittels der Eingabegeräte, wie einer Tastatur 8 und einer Maus 9, innerhalb der dreidimensionalen Aufnahme 5 navigieren und ein virtuelles Werkzeug 10 in Form eines Schiebereglers bedienen. Unter Berücksichtigung der Abmessungen eines Restzahns 11 eines ersten Nachbarzahns 12, eines zweiten Nachbarzahns 13 sowie unter Berücksichtigung der nicht dargestellten Gegenzähne wird ein erstes virtuelles dreidimensionales Zahnmodell 14 eines einzusetzenden Zahnersatzteils, im vorliegenden Fall eines einzelnen Zahns, unter Verwendung von automatisierten Algorithmen berechnet und/oder manuell angepasst. Nach der Planung des ersten Zahnmodells 14 beginnt das vorliegende Verfahren, wobei in einem Nachbearbeitungsschritt eine Teilfläche 15 des Nachbarzahns, der zugleich auch ein bezüglich einer Mittelachse 16 kontralateraler Zahn ist, ausgewählt wird. Die Teilfläche 15 ist gestrichelt dargestellt und enthält ästhetische Oberflächenstrukturen 17, wie horizontale Wachstumsrillen und vertikale Rillen, die zur Verdeutlichung skizzenhaft dargestellt sind. Anschließend wird die ausgewählte Teilfläche 15 mit den ästhetischen Oberflächenstrukturen 17 unter Verwendung eines Spiegelungsalgorithmus an der Mittelachse 16 gespiegelt, wie durch den Pfeil 18 dargestellt ist. Im nächsten Schritt wird die gespiegelte Teilfläche 15 mit den ästhetischen Oberflächenstrukturen 17 an das erste Zahnmodell 14 angepasst und anschließend eingefügt, wobei die ursprüngliche Teilfläche 19 mit einer glatten Oberfläche durch die neue angepasste Teilfläche mit ästhetischen Oberflächenstrukturen ersetzt wird. Auf diese Weise werden dem ersten Zahnmodell 14 ästhetische Oberflächenstrukturen 17 hinzugefügt. Im vorliegenden Fall ist das einzusetzende Zahnersatzteil ein Schneidezahn, so dass die einzusetzende Teilfläche 15 mit den ästhetischen Oberflächenstrukturen 17 einer Labialfläche entspricht. Bei einem Backenzahn müssten die sichtbaren ästhetischen Oberflächen, wie die Bukkalfläche und/oder die Okklusalfläche mit ästhetischen Oberflächenstrukturen versehen werden. Bei der Anpassung wird die Teilfläche 15 umfassend die Oberflächenstrukturen 17 bezüglich festgelegter Parameter, wie der Form, der Größe und/oder einer Einprägungstiefe, variiert. Im dargestellten Fall wird das erste virtuelle Werkzeug 10 verwendet, um den Parameter der Einprägungstiefe zu variieren, wobei ein Schiebebalken 20 zwischen einer ersten Endstellung 21 und einer zweiten Endstellung 22 verschoben wird, wobei während der Verschiebung die ästhetischen Oberflächenstrukturen 17 bezüglich des ausgewählten Parameters der Einprägungstiefe zwischen einer ersten Basis-Oberflächenstruktur 23 mit einer hohen Einprägungstiefe und einer zweiten Basis-Oberflächenstruktur 24 mit einer niedrigeren Einprägungstiefe verändert wird. Der Schiebebalken 20 ist also ein Mischregler, so dass die Zwischenstellungen zwischen den beiden Endstellungen 21 und 22 Kombinationen der beiden Basis-Oberflächenstrukturen 23 und 24 darstellen. Damit kann der Benutzer auf einfache Art und Weise die Einprägungstiefe auswählen. Nach dem vorliegenden Verfahren kann auch eine einzelne Basis-Oberflächenstruktur ausgewählt werden, und mittels des Schiebereglers lediglich die Gewichtung dieser Basis-Oberflächenstruktur ausgehend von der glatten Teilfläche 19 verändert werden. Anschließend werden im letzten Schritt die Oberflächeninformationen des ersten Zahnmodells 14 mit den eingefügten Oberflächenstrukturen 17 in Maschinenbefehle übersetzt und an eine herkömmliche CAD/CAM-Bearbeitungsmaschine 25 übermittelt, wobei die CAD/CAM-Bearbeitungsmaschine 25 mittels der Bearbeitungswerkzeuge 26 und 27 das herzustellende Zahnersatzteil 28 aus einem Rohling 29 herausarbeitet.

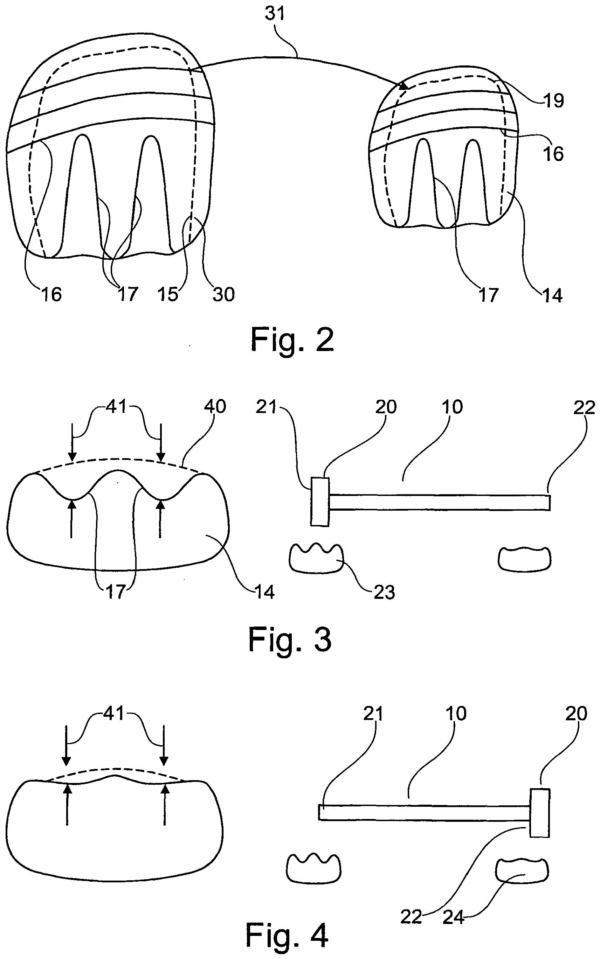

Die Fig. 2 zeigt eine Anwendung des virtuellen Werkzeugs 10 auf die ausgewählte Teilfläche 15 eines Musterzahns 30 aus einer Datenbank mit Musterzähnen, die nach Größe, Abmessungen und/oder der Zahnart sortiert sind. Im vorliegenden Fall ist die Größe des Musterzahns 30 erheblich größer als die Abmessungen des ersten Zahnmodells 14, so dass mittels des virtuellen Werkzeugs 10 die Teilfläche 15 mit den ästhetischen Oberflächenstrukturen 17 verkleinert wird und dem ersten Zahnmodell 14 hinzugefügt wird, wie durch den Pfeil 31 dargestellt ist. Dabei wird die ursprüngliche Teilfläche 19, die gestrichelt dargestellt ist, durch die verkleinerte Teilfläche 15 ersetzt.

Die Fig. 3 zeigt eine Skizze zur Verdeutlichung der Einstellung der Einprägungstiefe mittels des virtuellen Werkzeugs 10 aus Fig. 1. Das erste Zahnmodell 14 ist dabei aus einer inzisalen Richtung im Querschnitt dargestellt, wobei die vertikalen Rillen 17 sich deutlich von der ursprünglichen glatten Oberfläche 40 des ursprünglichen Zahnmodells 14, die gestrichelt dargestellt ist, unterscheiden. Der Schiebebalken 20 ist in die erste Endstellung 21 verschoben, so dass die erste Basis-Oberflächenstruktur 23 eingestellt ist und eine Einprägungstiefe 41 den höchsten Wert aufweist.

In der Fig. 4 ist der Schiebebalken 20 in der zweiten Endstellung 22 dargestellt, wobei die zweite Basis-Oberflächenstruktur 24 eingestellt ist und die Einprägungstiefe 41 minimal eingestellt ist. Beim Verschieben des Schiebebalkens 20 zwischen den beiden Endstellungen 21 und 22 wird somit die Einprägungstiefe 41 verändert und gesteuert. Die Veränderung der Einprägungstiefe 41 kann dabei linear erfolgen.

### Bezugszeichen

- 1: Unterkiefer
- 2: Oberkiefer
- 3: dreidimensionale dentale Kamera
- 4: Computer
- 5: dreidimensionale optische Aufnahme
- 6: Anzeigevorrichtung; Monitor
- 7: Cursor
- 8: Tastatur
- 9: Maus
- 10: virtuelles Werkzeug; Schieberegler
- 11: Restzahn
- 12: erster Nachbarzahn
- 13: zweiter Nachbarzahn
- 14: erstes dreidimensionales Zahnmodell
- 15: Teilfläche des Zahnmodells
- 16: Mittelachse
- 17: ästhetischen Oberflächenstrukturen
- 18: Spiegelungsalgorithmus an der Mittelachse
- 19: ursprüngliche glatte Teilfläche
- 20: Schiebebalken
- 21: erste Endstellung
- 22: zweite Endstellung
- 23: erste Basis-Oberflächenstruktur
- 24: zweite Basis-Oberflächenstruktur
- 25: CAD/CAM-Bearbeitungsmaschine
- 26: Bearbeitungswerkzeug
- 27: Bearbeitungswerkzeug
- 28: herzustellendes Zahnersatzteil
- 29: Rohling
- 30: Musterzahn
- 31: Verkleinern der Oberflächenstrukturen
- 40: ursprüngliche glatte Oberfläche des Zahnmodells
- 41: Einprägungstiefe

## Patentansprüche

1. Verfahren zur virtuellen Nachbearbeitung eines bei der Planung eines Zahnersatzteils (28) erzeugten ersten virtuellen dreidimensionalen Zahnmodells (14) dieses Zahnersatzteils (28), wobei das erste virtuelle Zahnmodell (14) nach der Planung in einem weiteren Verfahrensschritt (18, 31) virtuell bearbeitet wird, indem mindestens eine bereits vorhandene dreidimensionale ästhetische Oberflächenstruktur (17) mittels eines virtuellen Werkzeugs (10) unter Verwendung eines Computers (4) und einer Anzeigevorrichtung (6) an das erste Zahnmodell (14) angepasst wird und anschließend in das erste Zahnmodell (14) eingefügt wird, wobei die ästhetische Oberflächenstruktur (17) eine vorgegebene Einprägungstiefe (41) aufweist, wobei eine Zahnoberfläche (19) des Zahnmodells (14) zumindest teilweise durch die angepasste ästhetische Oberflächenstruktur (15, 17) ersetzt wird, wobei die virtuelle Bearbeitung der anzupassenden ästhetischen Oberflächenstruktur (17) dadurch erfolgt, dass ein bestimmter ausgewählter Parameter (41) der ästhetischen Oberflächenstruktur zwischen einem ersten Wert und einen zweiten Wert dieses ausgewählten Parameters (41) variiert wird, indem das virtuelle Werkzeug (10, 20) zwischen einer ersten Endstellung (21) und einer zweiten Endstellung (22) verstellt wird, wobei der Parameter der ästhetischen Oberflächenstruktur (15, 17) eine Einprägungstiefe (41) der ästhetischen Oberflächenstruktur (17) relativ zu einer ursprünglichen glatten Oberfläche (40) des ursprünglichen ersten Zahnmodells (14) ist.

2. Verfahren nach Anspruch 1, **dadurch gekennzeichnet, dass** das virtuelle Werkzeug (10) in Form eines Schiebereglers ausgeführt ist, wobei die mittels der Anzeigevorrichtung (6) angezeigte ästhetische Oberflächenstruktur (17) bezüglich des ausgewählten Parameters (41) zwischen einer ausgewählten ersten Basis-Oberflächenstruktur (23) mit dem ersten Wert dieses Parameters und einer ausgewählten zweiten Basis-Oberflächenstruktur (24) mit dem zweiten Wert dieses Parameters variiert wird, indem der Schieberegler (10, 20) zwischen der ersten Endstellung (21) und der zweiten Endstellung (22) virtuell verschoben wird.

3. Verfahren nach Anspruch 1 oder 2, **dadurch gekennzeichnet, dass** die ästhetische Oberflächenstruktur (17) eines Musterzahns (30) aus einer Datenbank mit Musterzähnen ausgewählt wird, die nach Größe, Alter, Abmessungen und/oder nach einer Zahnnummer bzw. Zahnart, wie Schneidezahn, Eckzahn, Prämolar, Molar, sortiert sind.

4. Verfahren nach einem der Ansprüche 1 bis 3, **dadurch gekennzeichnet, dass** die anzupassende ästhetische Oberflächenstruktur (15, 17) von einem Durchschnittszahn übernommen wird, der unter Verwendung eines Hauptachsenanalyseverfahrens und eines Optimierungsverfahrens der kleinsten Quadrate ausgehend von einer Vielzahl vermessener natürlicher Zähne und/oder von Musterzähnen unter Anpassung an die Abmessungen und die Größe des ersten Zahnmodells erzeugt wird.

5. Verfahren nach einem der Ansprüche 1 bis 4, **dadurch gekennzeichnet, dass** die anzupassende ästhetische Oberflächenstruktur (15, 17) aus einer dreidimensionalen optischen Aufnahme (5) eines Restzahnbereichs (11), eines Nachbarzahns (12, 13), eines kontralateralen Zahns (13) und/oder eines Gegenzahns bezüglich des einzusetzenden Zahnersatzteils (28) ausgewählt wird, wobei die Auswahl der anzupassenden ästhetischen Oberflächenstruktur (17) einer bestimmten ästhetischen Oberfläche, wie einer Labialfläche (15) bei Schneidezähnen und/oder einer Bukkalfläche und einer Okklusalfläche bei Backenzähnen, automatisch mittels des Computers (4) unter Verwendung von Mustererkennungsalgorithmen oder manuell durch einen Benutzer mittels der Anzeigevorrichtung (6) erfolgt.

6. Verfahren nach einem der Ansprüche 1 bis 5, **dadurch gekennzeichnet, dass** bei der Planung des Zahnersatzteils (28) zusätzlich zum ersten Zahnmodell (14) mindestens ein zweites Zahnmodell eines kontralateralen Zahns (13) geplant wurde, wobei die an das erste Zahnmodell (14) angepasste Oberflächenstruktur (17) unter Verwendung eines Spiegelungsalgorithmus (18) in das zweite Zahnmodell des kontralateralen Zahns (13) eingefügt wird, wobei das Einfügen der gespiegelten Oberflächenstruktur in das zweite Zahnmodell erst nach der Anpassung der Oberflächenstruktur an das erste Zahnmodell (14) oder simultan zur Anpassung der Oberflächenstruktur (17) an das erste Zahnmodell (14) erfolgt.

7. Verfahren nach einem der Ansprüche 1 bis 6, **dadurch gekennzeichnet, dass** die anzupassende ästhetische Oberflächenstruktur (17) so gesteuert wird, dass die angepasste erzeugte ästhetische Oberflächenstruktur eine Überkonturierung mit einer im Vergleich zu einem natürlichen Zahn höheren Einprägungstiefe (41) relativ zu einer glatten Oberfläche (40) des unbearbeiteten ersten Zahnmodells (14) aufweist, so dass durch einen Polierungsschritt des Zahnersatzteils nach der Herstellung mittels einer CAD/CAM-Bearbeitungsmaschine (25) Material vom hergestellten Zahnersatzteil abgetragen wird und dadurch die hergestellte ästhetische Oberflächenstruktur (17) im Hinblick auf die Einprägungstiefe einer Oberflächenstruktur eines natürlichen Zahns aus einer dreidimensionalen optischen Aufnahme eines Restzahnbereichs (11), eines Nachbarzahns (12, 13), eines kontralateralen Zahns (13) und/oder eines Gegenzahns bezüglich des einzusetzenden Zahnersatzteils (28) entspricht.

8. Verfahren nach einem Ansprüche 1 bis 7, **dadurch gekennzeichnet, dass** das geplante Zahnersatzteil (28) mit der angepassten ästhetischen Oberflächenstruktur (17) mittels einer CAD/CAM-Bearbeitungsmaschine (25) aus einem Rohling (29) herausgearbeitet wird.

## Claims

1. Method for the virtual post-processing of a first virtual three-dimensional dental model (14) of a dental prosthesis part (28), said model having been created during the planning of the dental prosthesis part (28), wherein the first virtual dental model (14), after the planning stage, is processed virtually in an additional method step (18, 31) by adapting at least one three-dimensional aesthetic surface structure (17) already in existence to the first dental model (14) by means of a virtual tool (10) with the aid of a computer (4) and a display device (6), and by subsequently inserting said structure into the first dental model (14), wherein the aesthetic surface structure (17) has a predetermined impression depth (41), wherein a tooth surface (19) of the dental model (14) is at least partially replaced by the adapted aesthetic surface structure (15, 17), wherein the aesthetic surface structure (17) to be adapted is virtually processed in that a specific, selected parameter (41) of the aesthetic surface structure is varied between a first value and a second value of this selected parameter (41) by adjusting the virtual tool (10, 20) between a first end position (21) and a second end position (22), wherein the parameter of the aesthetic surface structure (15, 17) is an impression depth (41) of the aesthetic surface structure (17) relative to an original smooth surface (40) of the original first dental model (14).

2. Method according to claim 1, **characterized in that** the virtual tool (10) is designed in the form of a slider, wherein the aesthetic surface structure (17), which is displayed by a display device (6), is varied with respect to the selected parameter (41) between a selected first basic surface structure (23) with the first value of this parameter and a selected second basic surface structure (24) with the second value of this parameter by virtually shifting the slider (10, 20) between the first end position (21) and the second end position (22).

3. Method according to claim 1 or 2, **characterized in that** the aesthetic surface structure (17) of a sample tooth (30) is selected from a database with sample teeth, which are sorted according to size, age, dimensions, and/or a tooth number or tooth type, such as incisor, canine, premolar, or molar.

4. Method according to one of claims 1 through 3, **characterized in that** the aesthetic surface structure (15, 17) to be adapted is taken from an average tooth, which is generated using a primary axis analysis method and a least squares optimization method based upon a plurality of natural teeth surveyed and/or upon sample teeth, adapting to the dimensions and size of the first dental model.

5. Method according to one of claims 1 through 4, **characterized in that** the aesthetic surface structure (15, 17) to be adapted is selected from a three-dimensional optical image (5) of a residual tooth region (11), a neighboring tooth (12, 13), a contralateral tooth (13), and/or an opposing tooth with respect to the dental prosthesis part (28) to be used, wherein the aesthetic surface structure (17) to be adapted of a specific aesthetic surface, such as a labial surface (15) of incisors, and/or a buccal surface and an occlusal surface of molar teeth, is selected automatically by the computer (4) using sample recognition algorithms, or manually by a user using the display device (6).

6. Method according to one of claims 1 through 5, **characterized in that**, during the planning of the dental prosthesis part (28), at least one second dental model of a contralateral tooth (13) was planned in addition to the first dental model (14), wherein the surface structure (17) adapted to the first dental model (14) is inserted into the second dental model of the contralateral tooth (13) using a mirroring algorithm (18), wherein the mirrored surface structure is inserted into the second dental model only after adapting the surface structure to the first dental model (14) or simultaneously to adapting the surface structure (17) to the first dental model (14).

7. Method according to one of claims 1 through 6, **characterized in that** the aesthetic surface structure (17) to be adapted is controlled such that the adapted aesthetic surface structure generated has an overcontouring with a greater impression depth (41), in comparison to a natural tooth, relative to a smooth surface (40) of the unprocessed first dental model (14), so that material is removed from the produced dental prosthesis part in a polishing step of the dental prosthesis part after being generated using a CAD/CAM processing machine (25), and thereby the generated aesthetic surface structure (17), in terms of the impression depth, corresponds to a surface structure of a natural tooth from a three-dimensional optical image of a residual tooth region (11), a neighboring tooth (12, 13), a contralateral tooth (13), and/or an opposing tooth with respect to the dental prosthesis part (28) to be used.

8. Method according to one of claims 1 through 7, **characterized in that** the planned dental prosthesis part (28) with the adapted aesthetic surface structure (17) is created from a blank (29) by means of a CAD/CAM processing machine (25).

## Revendications

1. Procédé pour le posttraitement virtuel d'un premier modèle dentaire (14) tridimensionnel, virtuel, d'une prothèse dentaire (28), obtenu lors de la planification de cette prothèse dentaire (28), dans lequel le premier modèle dentaire (14) virtuel est traité virtuellement après la planification dans une autre étape de procédé (18, 31) en ce qu'au moins une structure de surface (17) esthétique, tridimensionnelle, déjà présente, est adaptée au moyen d'un outil (10) virtuel, avec utilisation d'un ordinateur (4) et d'un dispositif indicateur (6), au premier modèle dentaire (14) et ensuite introduite dans le premier modèle dentaire (14), dans lequel la structure de surface (17) esthétique présente une profondeur d'empreinte (41) prédéfinie, dans lequel une surface dentaire (19) du modèle dentaire (14) est remplacée au moins partiellement par la structure de surface (15, 17) esthétique adaptée, dans lequel le traitement virtuel de la structure de surface (17) esthétique à adapter a lieu en ce qu'un paramètre (41) choisi, déterminé, de la structure de surface esthétique est varié entre une première valeur et une deuxième valeur de ce paramètre (41) choisi, en ce que l'outil (10, 20) virtuel est déplacé entre une première position d'extrémité (21) et une deuxième position d'extrémité (22), dans lequel le paramètre de la structure de surface (15, 17) esthétique est une profondeur d'empreinte (41) de la structure de surface (17) esthétique par rapport à une surface (40) lisse initiale du premier modèle dentaire (14) initial.

2. Procédé selon la revendication 1, **caractérisé en ce que** l'outil virtuel (10) est réalisé sous forme d'un curseur, dans lequel la structure de surface (17) esthétique indiquée au moyen du dispositif indicateur (6) est variée, quant au paramètre (41) choisi, entre une première structure de surface (23) de base choisie, présentant la première valeur de ce paramètre, et une deuxième structure de surface (24) de base choisie, présentant la deuxième valeur de ce paramètre, **en ce que** le curseur (10, 20) est déplacé virtuellement entre la première position d'extrémité (21) et la deuxième position d'extrémité (22).

3. Procédé selon la revendication 1 ou 2, **caractérisé en ce que** la structure de surface (17) esthétique d'une dent modèle (30) est choisie dans une base de données de dents modèles, qui sont triées en fonction de la taille, de l'âge, des dimensions et/ou d'un numéro ou d'un type de dent, tel qu'une incisive, une canine, une prémolaire, une molaire.

4. Procédé selon l'une quelconque des revendications 1 à 3, **caractérisé en ce que** la structure de surface (15, 17) esthétique à adapter est reprise d'une dent moyenne, qui est obtenue avec utilisation d'un procédé d'analyse d'axe principal et d'un procédé d'optimisation des moindres carrés, partant d'une pluralité de dents naturelles mesurées et/ou de dents modèles avec adaptation aux dimensions et à la taille du premier modèle dentaire.

5. Procédé selon l'une quelconque des revendications 1 à 4, **caractérisé en ce que** la structure de surface (15, 17) esthétique à adapter est choisie dans un cliché optique tridimensionnel (5) d'une zone (11) résiduelle de dent, d'une dent adjacente (12, 13), d'une dent controlatérale (13) et/ou d'une dent antagoniste par rapport à la prothèse dentaire (28) à placer, le choix de la structure de surface (17) esthétique à adapter d'une surface esthétique déterminée, telle qu'une surface labiale (15) pour les incisives et/ou une surface buccale et une surface d'occlusion pour les molaires, ayant lieu automatiquement au moyen de l'ordinateur (4) avec utilisation d'algorithmes de reconnaissance de modèle ou manuellement par un utilisateur au moyen du dispositif indicateur (6).

6. Procédé selon l'une quelconque des revendications 1 à 5, **caractérisé en ce que** lors de la planification de la prothèse dentaire (28) on a planifié, en plus du premier modèle dentaire (14), au moins un deuxième modèle dentaire d'une dent controlatérale (13), dans lequel la structure de surface (17) adaptée au premier modèle dentaire (14) est introduite avec utilisation d'un algorithme miroir (18) dans le deuxième modèle dentaire de la dent controlatérale (13), dans lequel l'introduction de la structure de surface miroir dans le deuxième modèle dentaire n'a lieu qu'après l'adaptation de la structure de surface au premier modèle dentaire (14) ou simultanément avec l'adaptation de la structure de surface (17) au premier modèle dentaire (14).

7. Procédé selon l'une quelconque des revendications 1 à 6, **caractérisé en ce que** la structure de surface (17) esthétique à adapter est commandée de manière telle que la structure de surface esthétique obtenue adaptée présente un surprofilage doté d'une profondeur d'empreinte (41) plus élevée, comparativement à une dent naturelle, par rapport à une surface lisse (40) du premier modèle dentaire (14) non traité, de telle sorte qu'une étape de polissage de la prothèse dentaire après la fabrication au moyen d'une machine de traitement par CAO/FAO (25) élimine de la matière de la prothèse dentaire fabriquée et en conséquence que la structure de surface (17) esthétique fabriquée correspond, en ce qui concerne la profondeur d'empreinte, à une structure de surface d'une dent naturelle dans un cliché optique tridimensionnel d'une zone de dent résiduelle (11), d'une dent adjacente (12, 13), d'une dent controlatérale (13) et/ou d'une dent antagoniste par rapport à la prothèse dentaire (28) à placer.

8. Procédé selon l'une quelconque des revendications 1 à 7, **caractérisé en ce que** la prothèse dentaire (28) planifiée présentant la structure de surface (17) esthétique adaptée est usinée au moyen d'une machine de traitement par CAO/FAO (25) à partir d'une ébauche (29).
